# FASCICULE DE BREVET EUROPEEN

(11) **EP 3 996 889 B1**
(45) Date de publication et mention de la délivrance du brevet: **10.01.2024**
(21) Numéro de dépôt: 20746253.2
(22) Date de dépôt: 30.06.2020
(51) Int. Cl.: B28B 1/24, B28B 1/26, B28B 7/34, B28B 11/24, B28B 23/00, C04B 35/80, C04B 41/00, C04B 35/00

(54) **PROCEDE DE FABRICATION D'UNE PIECE EN MATERIAU COMPOSITE PAR INJECTION D'UNE BARBOTINE CHARGEE DANS UNE TEXTURE FIBREUSE**
VERFAHREN ZUR HERSTELLUNG EINES TEILS AUS EINEM VERBUNDMATERIAL DURCH INJEKTION EINER GEFÜLLTEN SCHLÄMME IN EINE FASERIGE TEXTUR
METHOD FOR PRODUCING A PART FROM COMPOSITE MATERIAL BY INJECTING A FILLED SLIP INTO A FIBROUS TEXTURE

(30) Priorité: 11.07.2019 FR 1907815; 11.07.2019 FR 1907816
(43) Date de publication de la demande: 18.05.2022
(73) Titulaire: SAFRAN AIRCRAFT ENGINES, 75015 Paris (FR)
(72) Inventeur: DROZ, Nicolas, 77550 MOISSY-CRAMAYEL (FR); IGLESIAS CANO, Célia, 77550 MOISSY-CRAMAYEL (FR); LE BIEZ, Philippe Charles Alain, 77550 MOISSY-CRAMAYEL (FR); LIAIS, Ludovic Philippe, 77550 MOISSY-CRAMAYEL (FR)
(74) Mandataire: Cabinet Beau de Loménie
(86) Numéro de dépôt international: PCT/FR2020/051139
(87) Numéro de publication internationale: WO 2021/005282

(56) Documents cités:
- WO-A1-2017/060601
- WO-A1-2017/187050
- CN-A- 104 760 118
- FR-A1- 3 041 631
- JP-A- H01 210 306
- US-A1- 2005 058 541

## Description

### Domaine Technique

La présente invention concerne la fabrication de pièces à partir d'une barbotine chargée de particules et notamment des pièces en céramique, en matériau abradable ou en matériau composite thermostructural notamment de type Oxyde/Oxyde ou à matrice céramique (CMC), c'est-à-dire comportant un renfort fibreux formé à partir de fibres en matériau céramique réfractaire densifié par une matrice également en matériau céramique réfractaire.

### Technique antérieure

Dans le cas de pièces en matériau composite Oxyde/Oxyde ou CMC, celles-ci peuvent être élaborées par voie liquide qui comprend une étape d'imprégnation d'une texture fibreuse avec une barbotine chargée, par exemple de particules d'alumine dans le cas d'un matériau composite Oxyde/Oxyde ou de particules de carbure de silicium (SiC) dans le cas d'un matériau composite CMC. Dans un tel cas, il faut drainer ou filtrer la phase liquide de la barbotine afin d'obtenir un remplissage optimal des porosités résiduelles présentes dans la texture fibreuse avec les charges solides.

Le document WO 2017/060601 décrit l'utilisation d'un moule en matériau poreux comprenant une cavité de moulage contenant une texture fibreuse dans laquelle est injectée une barbotine chargée de particules solides réfractaires. Le moule en matériau poreux permet d'éliminer la phase liquide de la barbotine introduite dans la texture fibreuse tout en retenant les particules solides réfractaires dans la cavité de moulage. Le moule en matériau poreux est maintenu à l'intérieur d'une enceinte en matériau rigide pendant l'injection sous pression de la barbotine. Afin d'acheminer la barbotine jusqu'à la cavité de moulage, un canal d'alimentation est percé dans le moule poreux ainsi que dans le milieu poreux éventuellement présent entre le moule et l'enceinte rigide.

De même, pour la réalisation de pièces monolithiques en matériau céramique ou abradable, on utilise un moule en matériau poreux du type décrit ci-avant pour éliminer la phase liquide afin de retenir les particules solides dans la cavité de moulage de celui-ci et obtenir ensuite une ébauche constituée en tout ou partie de ces particules.

Si cette solution permet d'optimiser le drainage de la phase liquide de la barbotine et le dépôt homogène et dense des particules dans la cavité de moulage, le démoulage de l'ébauche après injection et filtration de la barbotine constitue une opération délicate. En effet, la rugosité du moule en matériau poreux combinée à la taille submicronique des poudres déposées lors de l'injection de la barbotine dans la cavité de moulage entrainent un accrochage de l'ébauche sur le moule. L'ébauche étant démoulée au moyen d'un effort mécanique (levier, grattage, etc.), il existe un risque important de déformer et/ou d'abîmer l'ébauche et/ou le moule lors de l'opération de démoulage. L'application d'un effort mécanique de démoulage sur l'ébauche peut en particulier entraîner des arrachements locaux et/ou des fissurations dans celle-ci.

JP H01 210306 A divulgue un procédé de fabrication d'une pièce selon le préambule de la revendication 1.

### Exposé de l'invention

La présente invention a pour but de remédier aux inconvénients précités et de proposer une solution qui permet de réduire les risques d'endommagement de l'ébauche de pièce et du moule en matériau poreux lors du démoulage de l'ébauche après injection et filtration d'une barbotine chargée dans la cavité de moulage.

A cet effet, l'invention propose un procédé de fabrication d'une pièce selon l'objet de la revendication 1.

Grâce à l'utilisation de la capsule sacrificielle, aucun effort mécanique de démoulage n'est exercé directement sur l'ébauche, ce qui permet d'éviter tout endommagement et/ou déformation de l'ébauche et, par conséquent, de la pièce finale. Ainsi, l'ébauche conserve après démoulage son intégrité et la forme adoptée dans la cavité de moulage. Avec cette solution, on minimise également le risque d'endommagement du moule en matériau poreux.

Selon une caractéristique particulière du procédé de l'invention, le procédé comprend en outre les étapes suivantes :
- formation d'une texture fibreuse à partir de fibres céramique réfractaires,
- placement de la texture fibreuse dans le volume interne de la capsule sacrificielle avant l'injection sous pression de la barbotine.

Selon une autre caractéristique particulière du procédé de l'invention, le procédé comprend en outre le placement de billes de verre dans la cavité de moulage avant l'injection sous pression de la barbotine.

Selon une caractéristique particulière du procédé de l'invention, la capsule sacrificielle est réalisée avec un matériau poreux identique au matériau poreux du moule.

Selon une autre caractéristique particulière du procédé de l'invention, la capsule sacrificielle est réalisée en un des matériaux suivants : résine poreux, polytétrafluoroéthylène, plâtre.

Selon une autre caractéristique particulière du procédé de l'invention, la capsule sacrificielle présente une épaisseur de paroi comprise entre 1 mm et 30 mm.

Selon une autre caractéristique particulière du procédé de l'invention, la capsule sacrificielle comprend une première et une deuxième parties assemblées l'une avec l'autre, la première partie comportant une première empreinte correspondant à une partie de la forme de la pièce à fabriquer, la deuxième partie comportant une deuxième empreinte correspondant à l'autre partie de la forme de la pièce à fabriquer.

Selon une autre caractéristique particulière du procédé de l'invention, le traitement thermique de l'ébauche comprend un premier palier réalisé à une température comprise entre 40°C et 95°C de manière à sécher leliquide de la barbotine présent dans la capsule sacrificielle et un deuxième palier réalisé à une température comprise entre 1000°C et 1100°C de manière à lier les particules entre elles et former une pièce à partir de l'ébauche.

Selon un aspect particulier, le premier palier est réalisé suivant une rampe de montée douce comprise entre 1 °C/mn et 6° C/mn pour atteindre une température comprise entre 40°C et 95°C maintenue sur une durée comprise entre 30 mn et 90 mn.

Selon une autre caractéristique particulière du procédé de l'invention, le traitement thermique comprend en outre un troisième palier réalisé après le premier palier et avant le deuxième palier, le troisième palier étant réalisé à une température comprise entre 450°C et 600°C de manière à brûler la capsule sacrificielle.

Selon un aspect particulier, le troisième palier est réalisé suivant une rampe de montée douce comprise entre 1 °C/mn et 7°C/mn pour atteindre une température comprise entre 450°C et 600°C maintenue sur une durée comprise entre 30 mn et 4 h.

Lorsque le procédé comporte l'étape de formation d'une texture fibreuse, les fils de la texture peuvent être des fils formés de fibres constituées d'un ou plusieurs des matériaux suivants : l'alumine, la mullite, la silice, un aluminosilicate, un borosilicate, du carbure de silicium et du carbone.

Les particules céramiques réfractaires peuvent être en un matériau choisi parmi : l'alumine, la mullite, la silice, un aluminosilicate, un aluminophosphate, la zircone, un carbure, un borure, un siliciure et un nitrure, ou un mélange de plusieurs de ces matériaux.

### Brève description des dessins

[Fig. 1] La figure 1 est une vue schématique en perspective éclatée d'un outillage d'injection,
[Fig. 2] La figure 2 est une vue schématique en coupe montrant l'outillage de la figure 1 fermé avec une texture fibreuse positionnée celui-ci,
[Fig. 3] La figure 3 est une vue schématique en coupe montrant l'imprégnation d'une texture fibreuse avec une barbotine chargée dans l'outillage de la figure 2.

### Description des modes de réalisation

L'invention s'applique d'une manière générale à la fabrication de pièces réalisée par injection d'une barbotine chargée de particules dans un moule apte à drainer ou filtrer la phase liquide de la barbotine de manière à retenir les particules qui constituent ensuite tout ou partie de la pièce. De manière non limitative, l'outillage de l'invention peut être utilisé pour fabriquer des pièces en céramique monolithique, des pièces ou revêtements en matériau abradable et des pièces en matériau composite thermostructural notamment de type Oxyde/Oxyde ou à matrice céramique (CMC). On décrit maintenant un procédé de fabrication de l'invention appliqué à la fabrication d'une pièce en matériau composite de type oxyde/oxyde ou CMC. Le procédé de fabrication d'une pièce en matériau composite notamment de type oxyde/oxyde ou CMC conforme à la présente invention débute par la réalisation d'une texture fibreuse destinée à former le renfort de la pièce.

Le procédé de fabrication d'une pièce en matériau composite notamment de type oxyde/oxyde ou CMC conforme à la présente invention débute par la réalisation d'une texture fibreuse destinée à former le renfort de la pièce.

La structure fibreuse est réalisée de façon connue par tissage au moyen d'un métier à tisser de type jacquard sur lequel on a disposé un faisceau de fils de chaîne ou torons en une pluralité de couches, les fils de chaîne étant liés par des fils de trame ou inversement. La texture fibreuse peut être réalisée par empilement de strates ou plis obtenus par tissage bidimensionnel (2D). La texture fibreuse peut également être réalisée directement en une seule pièce par tissage tridimensionnel (3D). Par « tissage bidimensionnel », on entend ici un mode de tissage classique par lequel chaque fil de trame passe d'un côté à l'autre de fils d'une seule couche de chaîne ou inversement. Le procédé de l'invention est particulièrement adapté pour permettre l'introduction d'une barbotine chargée dans des textures fibreuses 2D, à savoir des textures obtenues par empilement de strates ou plis 2D, d'épaisseur importante, c'est-à-dire des structures fibreuses 2D ayant une épaisseur d'au moins 0,5 mm, de préférence au moins 1 mm.

Par « tissage tridimensionnel » ou « tissage 3D » ou encore « tissage multicouche », on entend ici un mode de tissage par lequel certains au moins des fils de trame lient des fils de chaîne sur plusieurs couches de fils de chaîne ou inversement suivant un tissage correspondant à une armure de tissage qui peut être notamment choisie parmi une des armures suivantes : interlock, multi-toile, multi-satin et multi-sergé.

Les fils utilisés pour tisser la texture fibreuse destinée à former le renfort fibreux de la pièce en matériau composite peuvent être notamment formés de fibres constituées d'un des matériaux suivants: l'alumine, la mullite, la silice, un aluminosilicate, un borosilicate, du carbure de silicium, du carbone ou d'un mélange de plusieurs de ces matériaux.

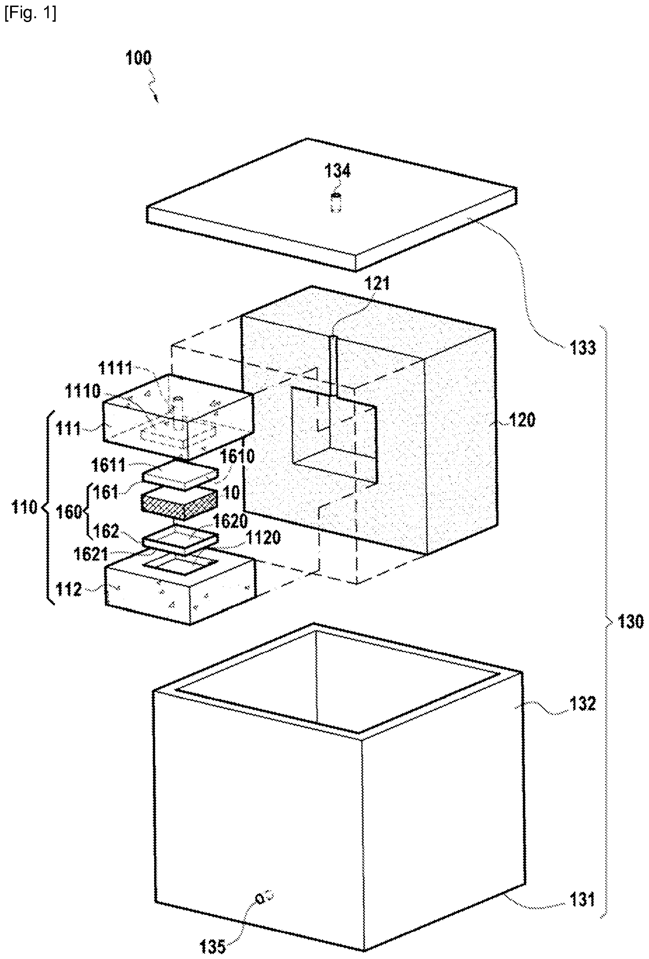

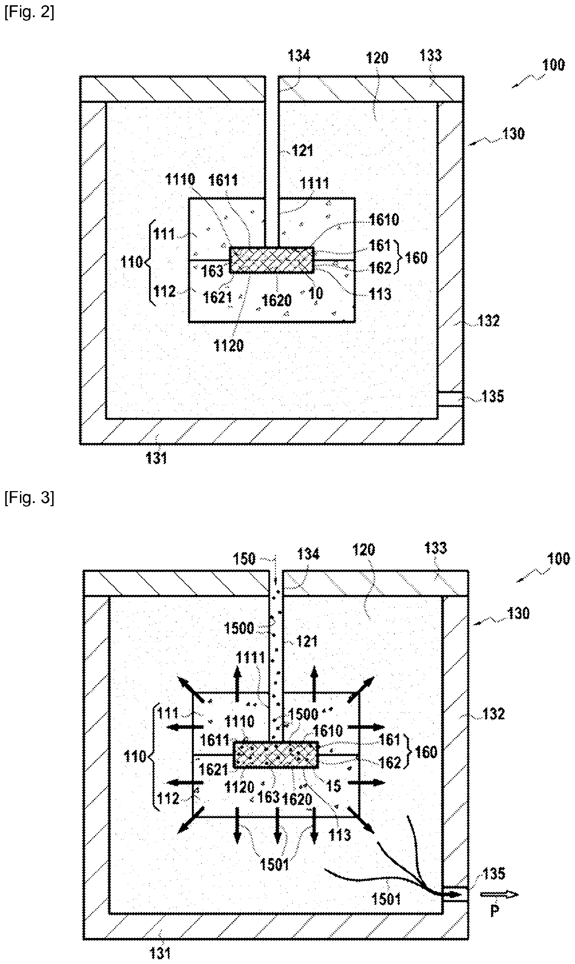

Une fois la texture fibreuse réalisée, celle-ci est placée dans un outillage d'injection conforme à l'invention qui permet, comme expliqué ci-après, de déposer des particules réfractaires au sein de la texture fibreuse. A cet effet et comme illustrée sur les figures 1 et 2, une texture fibreuse 10 est placée dans un outillage d'injection 100. Dans l'exemple décrit ici, la texture fibreuse 10 est réalisée suivant une des techniques définies ci-avant (empilement strates 2D ou tissage 3D) avec des fils d'alumine Nextel 610TM. La texture fibreuse 10 est ici destinée à former le renfort fibreux d'une aube en matériau composite oxyde/oxyde.

L'outillage 100 comprend un moule en matériau poreux 110 formé en deux parties 111 et 112. Les deux parties 111 et 112 délimitent une cavité de moulage 113 (figure 2) lorsqu'elles sont assemblées l'une contre l'autre, cavité dans laquelle la texture fibreuse est destinée à être placée. Les deux parties 111 et 112 servent à dimensionner l'ébauche ou la préforme et donc la pièce à obtenir ainsi qu'à ajuster le taux de fibres dans la pièce à obtenir.

Dans l'exemple décrit ici, la partie 111 du moule en matériau poreux 110 comporte un canal d'injection 1111 pour l'injection d'une barbotine chargée dans la texture fibreuse comme expliqué ci-après en détails. Le canal d'injection 1111 est réalisé, par exemple par perçage, dans le matériau poreux du moule 110.

L'outillage d'injection 100 comprend également une enceinte en matériau rigide 130 dans laquelle le moule en matériau poreux 110 est maintenu. L'enceinte 130 comprend un fond 131, une paroi latérale 132 solidaire du fond 131 et un couvercle 133. L'enceinte 130 peut être réalisée avec tout type de matériau présentant une rigidité suffisante pour résister aux pressions d'injection de la barbotine et au pompage (tirage du vide) pour l'évacuation de la phase liquide de celle-ci. L'enceinte peut être notamment réalisée en matériau métallique ou plastique.

Le couvercle 133 comporte un port d'injection 134 au travers duquel la barbotine est destinée à être injectée afin de pénétrer dans la porosité de la texture fibreuse 10. Dans l'exemple illustré aux figures 1 et 2, la barbotine est destinée à être injectée au travers d'un port d'injection 134 débouchant dans la cavité de moulage 113. Toutefois, on ne sort pas du cadre de l'invention lorsque la barbotine est injectée au travers d'une pluralité de ports d'injection débouchant dans la cavité de moulage.

L'enceinte 130 comporte un unique évent d'évacuation 135 du milieu liquide de la barbotine, présent ici sur la paroi latéral 132 au voisinage du fond 131. Bien entendu, on ne sort pas du cadre de l'invention lorsqu'une pluralité d'évents de sortie est mise en oeuvre à différents endroits de l'enceinte.

Dans le mode de réalisation décrit ici, le moule en matériau poreux 110 présente une taille inférieure au volume interne de l'enceinte en matériau métallique 130. Dans ce cas, le volume présent entre le moule en matériau poreux et l'enceinte en matériau rigide est comblé par un milieu poreux 120 afin de permettre la circulation et l'évacuation de la phase liquide de la barbotine. Le milieu poreux 120 peut être constitué notamment par du sable une mousse, ou un matériau granulaire. Concernant la mousse, tout type de mousse, rigide ou souple, qui présente un réseau de porosité permettant le passage du milieu liquide de la barbotine peut être utilisé comme milieu poreux. De même, tout type de matériau granulaire ayant un taux d'empilement compatible avec le passage de la phase liquide de la barbotine peut être utilisé comme milieu poreux. Le milieu poreux 120 comporte un canal d'injection 121 en communication à la fois avec le port d'injection 134 de l'enceinte 130 et le canal d'injection 1111 du moule en matériau poreux 110 afin de permettre l'injection de la barbotine dans la texture fibreuse 10. Le canal d'injection 121 est réalisé, par exemple par perçage, dans le matériau poreux du milieu 120. Dans l'exemple décrit ici les canaux d'injection 121 et 1111 forment le circuit d'alimentation dans l'outillage d'injection 100 pour l'injection de la barbotine chargée.

Le volume de vide présent dans le milieu poreux est de préférence supérieur à la quantité ou volume de la phase liquide de la barbotine qui doit être injectée dans la texture fibreuse. Cela permet d'évacuer la totalité de la phase liquide des parois du moule poreux lorsqu'un tirage de vide est réalisé au niveau du ou des évents d'évacuation et/ou lors de l'application de la pression dans le port d'injection.

Selon une variante de réalisation, le moule en matériau poreux présente des dimensions externes équivalentes au volume interne de l'enceinte de sorte que le moule en matériau poreux est directement en contact avec les parois internes de l'enceinte. Dans ce cas, le circuit d'alimentation dans l'outillage d'injection pour l'injection de la barbotine chargée est constitué seulement par le canal d'injection réalisé dans le moule en matériau poreux (pas de milieu poreux).

Une capsule sacrificielle 160 est interposée entre la texture fibreuse 10 et le moule en matériau poreux 110. Plus précisément, comme illustrée sur la figure 1, une capsule sacrificielle 160 est ici constituée de deux demi-coquilles 161 et 162 entre lesquelles la texture fibreuse est placée avant son introduction dans le moule en matériau poreux 110. Les demi-coquilles 161 et 162 comportent chacune respectivement une empreinte 1610 et une empreinte 1620. Les empreintes 1610 et 1620 délimitent un volume interne 163 (figure 2) lorsque les deux demi-coquilles 161 et 162 sont assemblées l'une contre l'autre, volume interne dans lequel la texture fibreuse 10 est maintenue. Les empreintes 1610 et 1620 présentent une forme correspondant à la forme de la pièce à fabriquer à partir de la texture fibreuse. Les deux demi-coquilles 161 et 162 servent à dimensionner la préforme et donc la pièce à obtenir ainsi qu'à ajuster le taux de fibres dans la pièce lors de la fermeture du moule en matériau poreux 110.

La capsule sacrificielle 160 est réalisée en matériau poreux. Elle peut être notamment réalisée à partir d'une résine poreuse. Dans ce cas, les demi-coquilles 161 et 162 de la capsule 160 sont elles-mêmes réalisées par moulage en injectant et en polymérisant une résine entre un moule et un contre-moule, le moule présentant une forme correspondant aux empreintes 1610 et 1620 des demi-coquilles 161 et 162 si lesdites empreintes sont identiques. Dans le cas contraire, on utilise un moule différent pour chaque demi-coquille 161 et 162 de manière à former dans chacune de celle-ci une empreinte différente. Les caractéristiques du réseau poreux de la capsule sacrificielle, notamment en termes de taille de pores et de taux de porosité, peuvent être contrôlées en ajustant le ou les cycles de polymérisation en fonction de la nature de la résine utilisée. On dispose, par conséquent, d'autant de choix de réseaux de porosité qu'il y a de résines poreuses disponibles. A titre d'exemples non limitatifs, les résines poreuses suivantes peuvent être utilisées pour la réalisation de la capsule sacrificielle :
- Gil-Resin^{®} T avec des pores ayant une taille comprise entre 8 et 13 µm,
- Gil-Resin^{®} F+ avec des pores ayant une taille comprise entre 4 et 7 µm,
- SamaPore avec des pores ayant une taille comprise entre 3 et 10 µm,
- Microplast Fine avec des pores ayant une taille moyenne de 7 µm.

La capsule sacrificielle 160, ou plus précisément les demi-coquilles 161 et 162 constituant la capsule, peuvent être aussi réalisées à partir d'un matériau poreux rigide tel que du polytétrafluoroéthylène (PTFE) microporeux comme les produits « microporous PTFE » vendus par la société Porex^{®}. Les empreintes 1610 et 1620 sont chacune respectivement réalisées par thermoformage ou usinage du matériau poreux.

Le moule en matériau poreux est de préférence réalisé avec le même matériau poreux utilisé pour réaliser la capsule sacrificielle, par exemple un des matériaux poreux mentionnés ci-avant.

L'ensemble capsule sacrificielle 160 et moule en matériau poreux 110 permet le drainage du milieu liquide de la barbotine à l'extérieur de la texture fibreuse 10 et son évacuation par l'évent 135 du fait de l'application d'un gradient de pression entre l'évent 135 et le port d'injection 134. A titre d'exemple, la taille moyenne des pores (D50) de la capsule et du moule en matériau poreux peut par exemple être comprise entre 1 µm et 10 µm.

La demi-coquille 161 de la capsule sacrificielle 160 comporte une surface externe 1611 tandis que la demi-coquille comporte quant à elle une surface externe 1622. Selon une caractéristique particulière de l'invention, les surface externes 1611 et 1622 présente une géométrie plane comme illustrée sur la figure 1. Dans ce cas, les surfaces internes 1110 et 1120 respectivement des deux parties 111 et 112 du moule 110 dans lesquelles sont logées respectivement les demi-coquilles 161 et 162 présentent également une géométrie plane comme illustrée sur la figure 1. Selon une autre caractéristique particulière de l'invention, les surfaces externes 1611 et 1622 présentent une géométrie correspondant respectivement à celle des empreintes 1610 et 1620 des deux demi-coquilles 161 et 162. Dans ce cas, les surfaces internes 1110 et 1120 respectivement des deux parties 111 et 112 du moule 110 dans lesquelles sont logées respectivement les demi-coquilles 161 et 162 présentent également une géométrie correspondant respectivement à celle des empreintes 1610 et 1620 des deux demi-coquilles 161 et 162.

L'épaisseur de paroi de la capsule sacrificielle 160 est réalisée la plus fine possible afin d'éviter une combustion trop importante de la capsule lors du traitement thermique. L'épaisseur de paroi de la capsule sacrificielle est déterminée en fonction de taille et de la géométrie de la pièce à fabriquer. En d'autres termes, l'épaisseur de paroi de la capsule sacrificielle est déterminée pour être aussi fine que possible tout en étant apte à rattraper les efforts de compactions quand ils sont appliqués et les efforts de mise sous pression lors de la filtration de la barbotine. La capsule sacrificielle présente une épaisseur de paroi de préférence comprise entre 1 mm et 30 mm.

La texture fibreuse 10 est d'abord placée dans la capsule sacrificielle 160. La capsule contenant la texture fibreuse est ensuite placée dans le moule en matériau poreux 110 de l'outillage d'injection 100 comme illustrée sur les figures 1 et 2.

La figure 3 illustre la configuration obtenue durant l'injection d'une barbotine 150 et le drainage du milieu ou phase liquide de celle-ci. Avant l'injection de la barbotine dans l'outillage, un tirage au vide a été réalisé au sein du moule en matériau poreux afin de remplir ensuite au maximum la texture fibreuse avec la barbotine. Le tirage au vide peut être réalisé par pompage au niveau de l'évent d'évacuation 135.

Sur la figure 3, la barbotine 150 est injectée sous pression par le port d'injection 134 et transportée jusqu'à la texture fibreuse 10 par les canaux d'injection 121 et 1111 de manière à pénétrer dans la texture fibreuse 10. Les particules réfractaires 1500 présentes dans la barbotine 150 sont destinées à permettre la formation d'une matrice céramique réfractaire dans la porosité de la texture fibreuse 10. Cette matrice céramique réfractaire peut, dans un exemple de réalisation, être une matrice d'oxyde réfractaire.

La barbotine peut par exemple être une suspension d'une poudre d'alumine dans de l'eau. La poudre d'alumine utilisée peut être une poudre d'alumine alpha commercialisée par la société Baikowski sous la dénomination SM8.

Plus généralement, la barbotine peut être une suspension comportant des particules céramiques réfractaires présentant une dimension particulaire moyenne comprise entre 0,1 µm et 10 µm. La teneur volumique en particules céramiques réfractaires dans la barbotine peut, avant l'injection, être comprise entre 15% et 40%. Les particules céramiques réfractaires peuvent comporter un matériau choisi parmi : l'alumine, la mullite, la silice, les aluminosilicates, les aluminophosphates, les carbures, les borures, les nitrures et les mélanges de tels matériaux. En fonction de leur composition de base, les particules céramiques réfractaires peuvent, en outre, être mélangées avec des particules d'alumine, de zircone, d'aluminosilicate, d'un oxyde de terre rare, de silicate de terre rare (lequel peut par exemple être utilisé dans les barrières environnementales ou thermiques) ou toute autre charge permettant de fonctionnaliser la pièce en matériau composite à obtenir comme le noir de carbone, le graphite ou le carbure de silicium.

Le milieu ou phase liquide de la barbotine peut, par exemple, comporter une phase aqueuse présentant un pH acide (i.e. un pH inférieur à 7) et/ou une phase alcoolique comportant par exemple de l'éthanol. La barbotine peut comporter un acidifiant tel que de l'acide nitrique et le pH du milieu liquide peut par exemple être compris entre 1,5 et 4. La barbotine peut, en outre, comporter un liant organique comme de l'alcool polyvinylique (PVA) lequel est notamment soluble dans l'eau.

Comme illustré sur la figure 3, après injection de la barbotine 150, les particules céramiques réfractaires 1500 sont présentes dans la porosité de la texture fibreuse 10. Les flèches 1501 représentent le mouvement du milieu ou phase liquide de la barbotine drainé à la fois par capsule sacrificielle 160 et par le moule en matériau poreux 110.

Un pompage P peut, en outre, être réalisé au niveau de l'évent de sortie 135 durant le drainage, par exemple au moyen d'une pompe à vide primaire. La réalisation d'un tel pompage permet d'améliorer le drainage et de sécher plus rapidement la texture fibreuse.

Dans cette configuration, la capsule sacrificielle 160 et le moule en matériau poreux 110 permettent de retenir dans la texture fibreuse 10 les particules céramiques réfractaires 1500 initialement présentes dans la barbotine et que tout ou partie de ces particules se déposent par filtration dans la texture fibreuse 10.

Grâce à l'utilisation de la capsule sacrificielle 160 et du moule en matériau poreux 110, le milieu ou phase liquide 1501 de la barbotine peut être drainé hors de la texture fibreuse 10 dans toutes les directions, le milieu ou phase liquide 1501 circulant ensuite dans le milieu poreux 120 jusqu'à l'évent 135 par lequel il est évacué hors de l'outillage d'injection 100. Ce drainage du milieu liquide dans toutes les directions permet de favoriser un dépôt par sédimentation homogène et dense des particules céramiques réfractaires 1500 dans la texture fibreuse 10 et d'obtenir, par conséquent, un taux volumique de matrice élevé dans la pièce finale.

En outre, la capsule sacrificielle 160 et le moule en matériau poreux 110 étant maintenus dans une enceinte en matériau rigide 130, celui-ci peut résister aux pressions d'injection de la barbotine chargée dans la texture ainsi qu'à celles exercées par le pompage pour l'évacuation du milieu liquide de la barbotine.

Une fois les étapes d'injection et de drainage effectuées, on obtient une ébauche correspondant ici à une préforme fibreuse 15 chargée de particules céramiques réfractaires, par exemple de particules d'oxyde céramique réfractaire ou d'alumine.

L'ébauche toujours protégée à l'intérieur de la capsule sacrificielle est alors démoulée, le démoulage de la préforme étant facilité par la présence de la capsule. En particulier, grâce à l'utilisation de la capsule sacrificielle, aucun effort mécanique de démoulage n'est exercé directement sur la préforme, ce qui permet d'éviter tout endommagement et/ou déformation de la préforme et, par conséquent, de la pièce finale. Ainsi, l'ébauche conserve après démoulage son intégrité et la forme adoptée dans la cavité de moulage.

L'ébauche et la capsule sont ensuite soumises à un traitement thermique comprenant au moins les deux paliers suivants :
a) un premier palier réalisé suivant une rampe de montée douce comprise entre 1 °C/mn et 6° C/mn pour atteindre une température comprise entre 40°C et 95°C maintenue sur une durée comprise entre 30 mn et 90 mn, ce premier palier permettant de sécher l'eau contenue dans la capsule afin d'éviter l'apparition de porosités de surface dues à l'ébullition, et
b) un deuxième palier réalisé suivant une rampe de montée douce comprise entre 1 °C/mn et 10°C/mn pour atteindre une température comprise entre 1000°C et 1100°C maintenue sur une durée comprise entre 4 h et 10 h, ce deuxième palier permettant à la fois de brûler la capsule sacrificielle et de fritter ou lier les particules céramiques réfractaires et ainsi former une matrice céramique réfractaire dans la porosité de la préforme fibreuse.

Un troisième palier peut être en outre réalisé après le premier palier et avant le deuxième palier afin de découpler l'élimination de la capsule sacrificielle du frittage ou liage des particules céramiques réfractaires. Ce troisième palier est réalisé suivant une rampe de montée douce comprise entre 1 °C/mn et 7°C/mn pour atteindre une température comprise entre 450°C et 600 °C maintenue sur une durée comprise entre 30 mn et 4 h, ce troisième palier permettant de brûler la capsule sacrificielle,

On obtient alors une pièce en matériau composite, par exemple une pièce en matériau composite Oxyde/Oxyde, munie d'un renfort fibreux formé par la préforme fibreuse et présentant un taux volumique de matrice élevé avec une répartition homogène de la matrice céramique réfractaire dans tout le renfort fibreux.

Une pièce en matériau composite CMC autre que Oxyde/Oxyde peut être obtenue de la même façon en réalisant la texture fibreuse avec des fibres de carbure de silicium et/ou de carbone et en utilisant une barbotine chargée de particules de carbure (par exemple de SiC), de borure (par exemple de TiB₂) ou de nitrure (par exemple de Si₃N₄).

Dans le cas de la fabrication d'une pièce en céramique monolithique, la capsule sacrificielle est vide avant l'injection de la barbotine. Une fois la capsule remplie par des particules céramiques déposées progressivement par sédimentation et drainage de la phase liquide de la barbotine, l'ébauche et la capsule sont soumises à un traitement thermique comme expliqué ci-avant afin d'obtenir la pièce finale. Dans le cas de la fabrication d'une pièce ou revêtement abradable, on place dans la capsule sacrificielle des billes par exemple en verre avant l'injection de la barbotine chargée. La capsule et l'ébauche constituée des billes et des particules amenées par la barbotine sont soumises à un traitement thermique comme expliqué ci-avant pour former la pièce ou le revêtement abradable final.

## Revendications

1. Procédé de fabrication d'une pièce comprenant les étapes suivantes :
- injection sous pression d'une barbotine (150) contenant une poudre de particules céramique réfractaires (1500) dans la cavité de moulage (113) d'un outillage d'injection (100),
- drainage du liquide de la barbotine (150) ayant traversé la cavité de moulage et rétention de la poudre de particules (1500) à l'intérieur de ladite cavité de moulage de manière à obtenir une ébauche (15) comprenant des particules réfractaires,
- démoulage de l'ébauche, et
- traitement thermique de l'ébauche afin de former une pièce,
l'outillage d'injection (100) comprenant un moule en matériau poreux (110) comportant une cavité de moulage (113), une enceinte en matériau rigide (130) dans laquelle le moule en matériau poreux (110) est maintenu, l'enceinte comprenant en outre au moins un port d'injection (134), au moins un évent d'évacuation (135) et au moins un canal d'injection (1111) reliant ledit au moins un port d'injection à la cavité de moulage du moule poreux pour l'injection de la barbotine dans la cavité de moulage, l'outillage d'injection (100) comprenant une capsule sacrificielle (160) en matériau poreux, la capsule sacrificielle (160) étant placée dans la cavité de moulage (113), et le démoulage de l'ébauche comprenant le démoulage de la capsule sacrificielle contenant l'ébauche, **caractérisé en ce que** ladite capsule est formée par deux parties (161, 162) formant un volume interne fermé (163) dans lequel se trouve l'ébauche et permettant un drainage d'une phase liquide de la barbotine à l'extérieur de son volume interne fermé.

2. Procédé selon la revendication 1, comprenant en outre les étapes suivantes :
- formation d'une texture fibreuse (10) à partir de fibres céramique réfractaires,
- placement de la texture fibreuse (10) dans le volume interne (163) de la capsule sacrificielle (160) avant l'injection sous pression de la barbotine.

3. Procédé selon la revendication 1, comprenant en outre le placement de billes de verre dans le volume interne (160) de la capsule sacrificielle.

4. Procédé selon l'une quelconque des revendications 1 à 3, dans lequel la capsule sacrificielle (160) est réalisée avec un matériau poreux identique au matériau poreux du moule (110).

5. Procédé selon l'une quelconque des revendications 1 à 4, dans lequel la capsule sacrificielle (160) est réalisée en un des matériaux suivants : résine poreux, polytétrafluoroéthylène, plâtre.

6. Procédé selon l'une quelconques des revendications 1 à 5, dans lequel la capsule sacrificielle (160) présente une épaisseur de paroi comprise entre 1 mm et 30 mm.

7. Procédé selon l'une quelconque des revendications 1 à 6, dans lequel la capsule sacrificielle (160) comprend une première et une deuxième parties (161, 162) assemblées l'une avec l'autre, la première partie (161) comportant une première empreinte (1610) correspondant à une partie de la forme de la pièce à fabriquer, la deuxième partie (162) comportant une deuxième empreinte (1620) correspondant à l'autre partie de la forme de la pièce à fabriquer.

8. Procédé selon l'une quelconque des revendications 1 à 7, dans lequel le traitement thermique de l'ébauche (15) comprend un premier palier réalisé à une température comprise entre 40°C et 95°C de manière à sécher le liquide de la barbotine présent dans la capsule sacrificielle (160) et un deuxième palier réalisé à une température comprise entre 1000°C et 1100°C de manière à lier les particules céramiques réfractaires (1500) entre elles et former une pièce à partir de l'ébauche.

9. Procédé selon la revendication 8, dans lequel le premier palier est réalisé suivant une rampe de montée douce comprise entre 1°C/mn et 6°C/mn pour atteindre une température comprise entre 40°C et 95°C maintenue sur une durée comprise entre 30 mn et 90 mn.

10. Procédé selon l'une quelconque des revendications 8 ou 9, dans lequel le traitement thermique comprend en outre un troisième palier réalisé après le premier palier et avant le deuxième palier, le troisième palier étant réalisé à une température comprise entre 450°C et 600°C de manière à brûler la capsule sacrificielle (160).

11. Procédé selon la revendication 10, dans lequel le troisième palier est réalisé suivant une rampe de montée douce comprise entre 1°C/mn et 7°C/mn pour atteindre une température comprise entre 450°C et 600°C maintenue sur une durée comprise entre 30 mn et 4 h.

## Patentansprüche

1. Verfahren zur Herstellung eines Teils, umfassend die folgenden Schritte:
- Einspritzung eines Tonschlamms (150), der ein Pulver aus feuerfesten Keramikpartikeln (1500) enthält, unter Druck in den Formhohlraum (113) eines Spritzgießwerkzeugs (100),
- Ablaufen der Flüssigkeit des Tonschlamms (150), die den Formhohlraum durchquert hat, und Zurückhalten des Partikelpulvers (1500) im Inneren des Formhohlraums auf solche Weise, um einen Rohling (15) umfassend feuerfeste Partikel zu erhalten,
- Entformung des Rohlings, und
- Wärmebehandlung des Rohlings, um ein Teil zu bilden,
wobei das Spritzgießwerkzeug (100) eine Form (110) aus porösem Material, die einen Formhohlraum (113) beinhaltet, und ein Gehäuse aus starrem Material (130) umfasst, in welchem die Form (110) aus porösem Material gehalten wird,
wobei das Gehäuse ferner zumindest einen Einspritzanschnitt (134), zumindest einen Entleerungsabzug (135) und zumindest einen Einspritzkanal (1111) umfasst, welcher den zumindest einen Einspritzanschnitt mit dem Formhohlraum der porösen Form für die Einspritzung des Tonschlamms in den Formhohlraum verbindet, wobei das Spritzgießwerkzeug (100) eine Opferkapsel (160) aus porösem Material umfasst, wobei die Opferkapsel (160) in dem Formhohlraum (113) platziert wird, und die Entformung des Rohlings die Entformung der Opferkapsel, die den Rohling enthält, umfasst, **dadurch gekennzeichnet, dass** die Kapsel aus zwei Teilen (161, 162) gebildet wird, die ein geschlossenes Innenvolumen (163) bilden, in welchem sich der Rohling befindet, und ein Ablaufen einer flüssigen Phase des Tonschlamms aus ihrem geschlossenen Innenvolumen nach außen erlaubt.

2. Verfahren nach Anspruch 1, ferner umfassend die folgenden Schritte:
- Bildung einer Fasertextur (10) aus feuerfesten Keramikfasern,
- Platzierung der Fasertextur (10) in dem Innenvolumen (163) der Opferkapsel (160) vor der Einspritzung des Tonschlamms unter Druck.

3. Verfahren nach Anspruch 1, ferner umfassend die Platzierung von Glasperlen in dem Innenvolumen (160) der Opferkapsel.

4. Verfahren nach einem der Ansprüche 1 bis 3, wobei die Opferkapsel (160) aus einem porösen Material verwirklicht ist, das identisch mit dem porösen Material der Form (110) ist.

5. Verfahren nach einem der Ansprüche 1 bis 4, wobei die Opferkapsel (160) aus einem der folgenden Materialien verwirklicht ist: poröses Harz, Polytetrafluorethylen, Gips.

6. Verfahren nach einem der Ansprüche 1 bis 5, wobei die Opferkapsel (160) eine Wanddicke zwischen 1 mm und 30 mm aufweist.

7. Verfahren nach einem der Ansprüche 1 bis 6, wobei die Opferkapsel (160) einen ersten und einen zweiten Teil (161, 162) umfasst, die miteinander verbaut sind, wobei der erste Teil (161) eine erste Matrize (1610) beinhaltet, welche einem Teil der Form des herzustellenden Teils entspricht, wobei der zweite Teil (162) eine zweite Matrize (1620) beinhaltet, welche dem anderen Teil der Form des herzustellenden Teils entspricht.

8. Verfahren nach einem der Ansprüche 1 bis 7, wobei die Wärmebehandlung des Rohlings (15) eine erste Stufe umfasst, die bei einer Temperatur zwischen 40 °C und 95 °C auf solche Weise verwirklicht wird, um die Flüssigkeit des Tonschlamms, die in der Opferkapsel (160) vorliegt, zu trocknen, und eine zweite Stufe, die bei einer Temperatur zwischen 1000 °C und 1100 °C auf solche Weise verwirklicht wird, um die feuerfesten Keramikpartikel (1500) untereinander zu verbinden und aus dem Rohling ein Teil zu bilden.

9. Verfahren nach Anspruch 8, wobei die erste Stufe einem sanften Anstieg zwischen 1 °C/min und 6 °C/min folgend verwirklicht wird, um eine Temperatur zwischen 40 °C und 95 °C zu erreichen, die über eine Dauer zwischen 30 min und 90 min gehalten wird.

10. Verfahren nach einem der Ansprüche 8 oder 9, wobei die Wärmebehandlung ferner eine dritte Stufe umfasst, die nach der ersten Stufe und vor der zweiten Stufe verwirklicht wird, wobei die dritte Stufe bei einer Temperatur zwischen 450 °C und 600 °C auf eine Weise verwirklicht wird, um die Opferkapsel (160) zu verbrennen.

11. Verfahren nach Anspruch 10, wobei die dritte Stufe einem sanften Anstieg zwischen 1 °C/min und 7 °C/min folgend verwirklicht wird, um eine Temperatur zwischen 450 °C und 600 °C zu erreichen, die über eine Dauer zwischen 30 min und 4 h gehalten wird.

## Claims

1. Manufacturing method for a part comprising the following steps:
- injecting under pressure a slip (150) containing a refractory ceramic particle powder (1500) into the moulding cavity (113) of an injection tooling (100),
- draining the liquid from the slip (150) that passed through the moulding cavity and retaining the particle powder (1500) inside said moulding cavity so as to obtain a blank (15) comprising refractory particles,
- demoulding the blank, and
- heat treating the blank in order to form a part,
the injection tooling (100) comprising a porous material mould (110) consisting of a moulding cavity (113), an enclosure of rigid material (130) in which the porous material mould (110) is held, the enclosure further comprising at least one injection port (134), at least one discharge vent (135) and at least one injection canal (1111) connecting said at least one injection port to the moulding cavity of the porous mould for the injection of the slip into the moulding cavity, the injection tooling (100) comprising a sacrificial capsule (160) made of a porous material, the sacrificial capsule (160) being placed in the moulding cavity (113) and the demoulding of the blank comprising the demoulding of the sacrificial capsule containing the blank, **characterized in that** said capsule is formed by two parts (161, 162) forming a closed internal volume (163) in which the blank is located and allowing drainage of a liquid phase from the slip out of its closed internal volume.

2. Method according to claim 1, also comprising the following steps:
- forming a fibrous texture (10) from refractory ceramic fibres,
- placing the fibrous texture (10) in the internal volume (163) of the sacrificial capsule (160) before injecting the slip under pressure.

3. Method according to claim 1, also comprising the placement of glass beads in the internal volume (160) of the sacrificial capsule.

4. Method according to any one of claims 1 to 3, wherein the sacrificial capsule (160) is made of a porous material identical to the porous material of the mould (110).

5. Method according to any one of claims 1 to 4, wherein the sacrificial capsule (160) is made of one of the following materials: porous resin, polytetrafluoroethylene or plaster.

6. Method according to any one of claims 1 to 5, wherein the sacrificial capsule (160) has a wall thickness comprised between 1 mm and 30 mm.

7. Method according any one of claims 1 to 6, wherein the sacrificial capsule (160) comprises a first and second part (161, 162) assembled together, the first part (161) consisting of a first cavity (1610) corresponding to one portion of the shape of the part to be manufactured, the second part (162) comprising a second cavity (1620) corresponding to the other portion of the shape of the part to be manufactured.

8. Method according any one of claims 1 to 7, wherein the heat treatment of the blank (15) comprises a first stage performed at a temperature between 40°C and 95°C so as to dry the liquid of the slip present in the sacrificial capsule (160) and a second stage performed at a temperature comprised between 1000°C and 1100°C so as to bind the refractory ceramic particles (1500) together and form a part from the blank.

9. Method according to claim 8, wherein the first stage is performed according to a gentle elevation gradient comprised between 1°C/min and 6°C/min to reach a temperature comprised between 40°C and 95°C maintained for a duration comprised between 30 min and 90 min.

10. Method according to either one of claims 8 or 9, wherein the heat treatment also comprises a third stage performed after the first stage and before the second stage, the third stage being performed at a temperature comprised between 450°C and 600°C so as to burn the sacrificial capsule (160).

11. Method according to claim 10, wherein the third stage is performed according to a gentle elevation gradient comprised between 1°C/min and 7°C/min to reach a temperature comprised between 450°C and 600°C maintained for a duration comprised between 30 min and 4 h.
